# EUROPEAN PATENT APPLICATION

(11) **EP 1 698 803 A1**
(43) Date of publication of application: **06.09.2006**
(21) Application number: 04807364.7
(22) Date of filing: 20.12.2004
(51) Int. Cl.: F16H 7/08

(54) **CHAIN TENSIONER**

(30) Priority: 18.12.2003 JP 2003420599
(71) Applicant: NTN CORPORATION, Osaka-shi, Osaka 550-0003 (JP)
(72) Inventor: SATO, Seiji, c/o NTN Corporation, Iwata-shi, Shizuoka 4388510 (JP); IZUTSU, Tomoyoshi, c/o NTN Corporation, Iwata-shi, Shizuoka 4388510 (JP); KITANO, Satoshi, c/o NTN Corporation, Iwata-shi, Shizuoka 4388510 (JP); HAYAKAWA, Hisashi, c/o NTN Corporation, Iwata-shi, Shizuoka 4388510 (JP)
(74) Representative: Grünecker, Kinkeldey, Stockmair & Schwanhäusser Anwaltssozietät
(86) International application number: PCT/JP2004/019007
(87) International publication number: WO 2005/059403

(57) **Abstract**

A chain tensioner is provided which can prevent separation of the plunger.

In a cylinder chamber 12 of the housing 11, a plunger 13 and a spring 15 that biases the plunger 13 outwardly are mounted. The housing 11 is provided with an oil supply passage 17 communicating with a pressure chamber 16 formed in the cylinder chamber behind the plunger 13. A ring fitting groove 30 is formed in the outer periphery of the plunger 13 near its rear end. An elastic ring 31 is received in the ring fitting groove 30 in a radially compressed state. An engaging groove 32 is formed in the inner periphery of the cylinder 12 near its open end. By engaging the elastic ring 31 partially in the engaging groove 32 and partially in the ring fitting groove 30, it is possible to prevent separation of the plunger 13.

## Description

### TECHNICAL FIELD

This invention relates to a chain tensioner for keeping constant tension in a chain such as a camshaft driving chain.

### BACKGROUND ART

Typically, a chain transmission device for driving camshafts includes a chain tensioner for applying regulating force to the slack side of the chain to keep constant tension in the chain.

Among conventional tensioners of this type, there is known one comprising a plunger slidably mounted in a cylinder chamber defined in a housing, and a spring mounted in the cylinder chamber and biasing the plunger outwardly of the cylinder chamber, wherein the housing is formed with an oil supply passage communicating with a pressure chamber formed behind the plunger, whereby the pushing force applied to the plunger is damped by hydraulic oil supplied through the oil supply passage into the pressure chamber.

In such a known chain tensioner, if the engine is stopped with the slack side of the chain tensioned according to the positions of the cams when the engine is stopped, the plunger is sometimes pushed in by the chain and retracts excessively while the engine is at a stop. When the engine is restarted in this state, the chain will significantly slacken, causing the plunger to protrude excessively outwardly. Because the engine has just started, a hydraulic pump cannot sufficiently quickly supply hydraulic oil into the pressure chamber through the oil supply passage, so that air may remain in the pressure chamber. This impairs the damping properties of the tensioner, thus sometimes producing noise.

When the chain and/or chain tensioner is dismounted for maintenance of the valve train of the engine, the plunger, which is being biased by the spring, tends to be pushed out of the cylinder chamber and separate from the housing.

In order to avoid these problems, the chain tensioner disclosed in Patent document 1 is provided with a retraction restrictor means for restricting the retraction of the plunger to prevent the plunger from being pushed into the cylinder chamber more than necessary when the engine has stopped. This tensioner further includes an anti-separation mechanism provided between the housing and the plunger for preventing the plunger from being pushed out of the plunger during maintenance of the valve train of the engine.
Patent document 1: Unexamined Japanese patent publication 2001-355691

### DISCLOSURE OF THE INVENTION

### PROBLEM TO WHICH THE INVENTION SEEKS A SOLUTION

In the conventional chain tensioner disclosed in Patent document 1, a ring mounting groove is formed in the inner periphery of the cylinder chamber of the housing near its open end. A register ring is mounted in the ring mounting groove. The register ring also engages in one of a plurality of engaging grooves formed in the outer periphery of the plunger to restrict the retraction of the plunger. The plunger is also formed with a safety groove in its outer periphery near its rear end. When the register ring is engaged in the safety groove, it prevents the plunger from being pushed out of the cylinder chamber. In this arrangement, the register ring is used both to restrict the retraction of the plunger and to prevent the plunger from being pushed out of the cylinder chamber. Thus, to re-set the chain tensioner after maintenance of the valve train of the engine, it was necessary to push the plunger into the cylinder chamber while expanding the register ring by pinching the control portion of the register ring to disengage the register ring from the safety groove.

If an operator forgets to push the plunger into the cylinder chamber, the plunger will be pushed out of the cylinder chamber under the force of the spring, thereby separating from the housing.

An object of this invention is to provide a chain tensioner which includes means for completely preventing separation of the plunger.

### MEANS TO ACHIEVE THE OBJECT

According to the present invention, there is provided a chain tensioner comprising a housing formed with a cylinder chamber, a plunger slidably mounted in the cylinder chamber, a spring mounted in the cylinder chamber and biasing the plunger outwardly of the cylinder chamber, and a retraction restrictor means provided between the housing and the plunger for preventing the plunger from retracting toward a closed end of the cylinder chamber over a predetermined distance, the housing being formed with an oil supply passage communicating with a pressure chamber defined in the cylinder chamber behind the plunger, whereby pushing force applied to the plunger is dampened by hydraulic oil supplied through the oil supply passage into the pressure chamber, characterized in that a ring fitting groove is formed in an outer periphery of the plunger at its portion near a rear end thereof which is located inside the cylinder chamber, that a radially elastically deformable elastic ring is received in the ring fitting groove in a radially compressed state, and that an engaging groove is formed in an inner periphery of the cylinder chamber near an open end thereof, the elastic ring being engageable in the engaging groove and being configured to radially expand in the engaging groove to such an extent that an inner diameter thereof is smaller than an outer diameter of the plunger.

Preferably, the engaging groove has a tapered surface of which the diameter gradually decreases toward the closed end of the cylinder chamber on its side near the closed end of the cylinder chamber.

From another aspect of the invention, there is provided a chain tensioner comprising a housing formed with a cylinder chamber, a plunger slidably mounted in the cylinder chamber, a spring mounted in the cylinder chamber and biasing the plunger outwardly of the cylinder chamber, and a retraction restrictor means provided between the housing and the plunger for preventing the plunger from retracting toward a closed end of the cylinder chamber over a predetermined distance, the housing being formed with an oil supply passage communicating with a pressure chamber defined in the cylinder chamber behind the plunger, whereby pushing force applied to the plunger is dampened by hydraulic oil supplied through the oil supply passage into the pressure chamber, characterized in that a ring fitting groove is formed in an inner periphery of the cylinder chamber near an open end thereof, that a radially elastically deformable elastic ring is received in the ring fitting groove in a radially expanded state, and that an engaging groove is formed in an outer periphery of the plunger near a rear end thereof, the elastic ring being engageable in the engaging groove and being configured to be radially compressed in the engaging groove to such an extent that an outer diameter thereof is larger than an inner diameter of the cylinder chamber.

Preferably, the engaging groove has a tapered surface of which the diameter gradually increases toward the front end of the plunger on its side near the front end of the plunger.

In either of the above-described two arrangements, the elastic ring may be a C-shaped member having two separate ends and formed of a steel wire having a circular cross-section, or may be made of a resin having excellent sliding properties.

### ADVANTAGES OF THE INVENTION

In the chain tensioner according to the first invention, when the chain or the chain tensioner is dismounted for maintenance of the valve train of the engine, the plunger is pushed out under the force of the spring until the ring fitting groove formed in the outer periphery of the plunger near its rear end radially aligns with the engaging groove. Thus, the elastic ring radially expands and engages in the engaging groove. In this state, the elastic ring engages partially in the ring fitting groove and partially in the engaging groove, thus preventing separation of the plunger by preventing any further advancement of the plunger.

In the arrangement in which the engaging groove has a tapered surface of which the diameter decreases toward the closed end of the cylinder chamber on its side near the closed end of the cylinder chamber, when the plunger is pushed into the cylinder chamber, the elastic ring is radially compressed by contact with the tapered surface and completely received in the ring fitting groove. Thus, the plunger can be easily returned to a set position.

In the chain tensioner according to the second invention, when the chain or the chain tensioner is dismounted for maintenance of the valve train of the engine, the plunger is pushed out under the force of the spring until the engaging groove formed in the outer periphery of the plunger near its rear end radially aligns with the ring fitting groove. Thus, the elastic ring is radially compressed and engages in the engaging groove. In this state, the elastic ring engages partially in the ring fitting groove and partially in the engaging groove, thus preventing separation of the plunger by preventing any further advancement of the plunger.

In the arrangement in which the engaging groove has a tapered surface of which the diameter increases toward the front end of the plunger on its side near the front end of the plunger, when the plunger is pushed into the cylinder chamber, the elastic ring radially expands by contact with the tapered surface and completely received in the ring fitting groove. Thus, the plunger can be easily returned to a set position.

### BRIEF DESCRIPTION OF THE DRAWINGS

Fig. 1 is a front view of a chain tensioner according to the present invention, as actually used;
Fig. 2 a vertical sectional front view of a chain tensioner according to a first embodiment of the present invention;
Fig. 3 is a sectional view taken along line III-III of Fig. 2;
Fig. 4 is a partial enlarged sectional view of Fig. 2;
Fig. 5 is a sectional view of the chain tensioner of Fig. 2, showing how separation of the plunger is prevented;
Fig. 6 is a vertical sectional front view of a chain tensioner according to a second embodiment of the present invention; and
Fig. 7 is a sectional view of the chain tensioner of Fig. 6, showing how separation of the plunger is prevented.

### DESCRIPTION OF THE NUMERALS

- 11: Housing
- 12: Cylinder chamber
- 13: Plunger
- 15: Spring
- 16: Pressure chamber
- 17: Oil supply passage
- 20: Retraction restrictor mechanism
- 30: Ring fitting groove
- 31: Elastic ring
- 32: Engaging groove
- 32a: Tapered surface
- 40: Ring fitting groove
- 41: Engaging groove
- 41a: Tapered surface

### BEST MODE FOR EMBODYING THE INVENTION

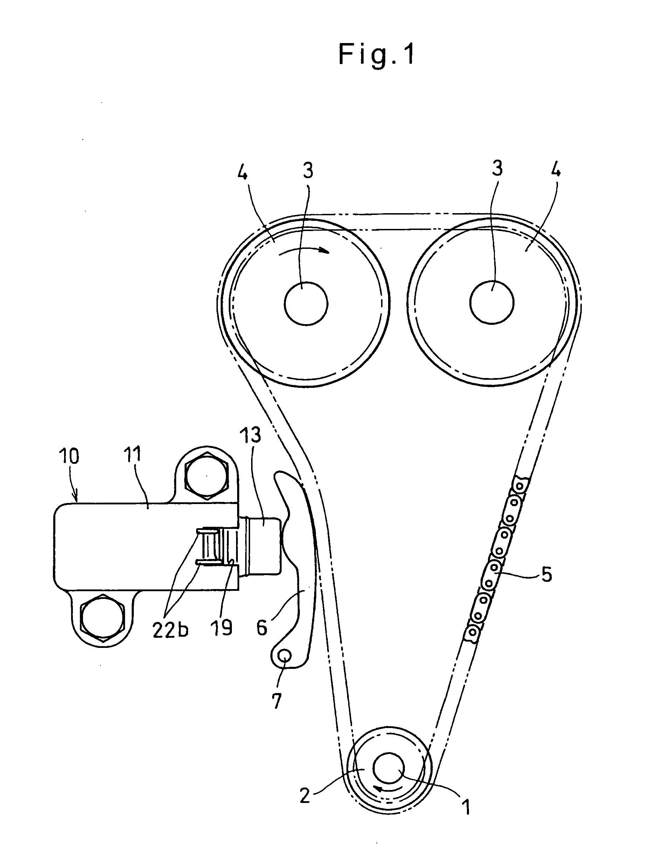

The embodiments of the present invention are now described with reference to the accompanying drawings. Fig. 1 shows a chain transmission device for driving camshafts, which includes a sprocket 2 mounted at one end of a crankshaft 1, sprockets 4 each mounted at one end of one of the camshafts 3, and a chain 5 trained around the sprockets 2 and 4.

A chain guide 6 is in contact with the slack side of the chain 5. The chain guide 6 is pivotable about a pin 7, and is pressed against the chain 5 by a chain tensioner 10 embodying the present invention.

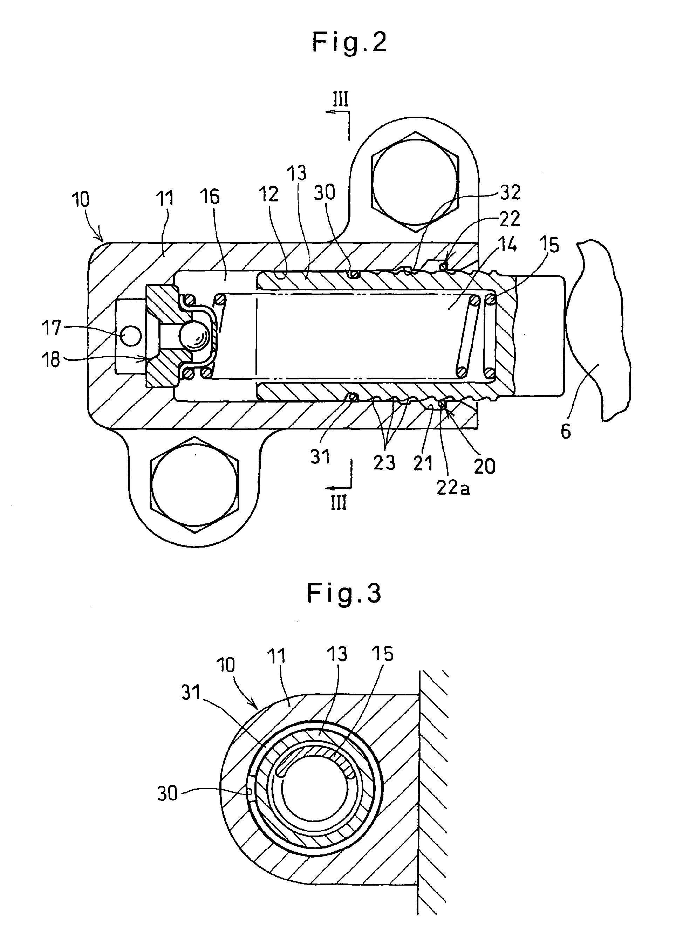

Figs. 2 to 5 show the chain tensioner according to the first embodiment of the present invention. As shown in Fig. 2, this chain tensioner includes a housing 11 mounted to an engine block and defining a cylinder chamber 12 having a closed end, and a plunger 13 slidably mounted in the cylinder chamber 12.

The plunger 13 has a bore 14 having a rear open end. A spring 15 is mounted between the closed end of the bore 14 and the closed end of the cylinder chamber 12 to bias the plunger 13 outwardly of the cylinder chamber 12.

The housing 11 is formed with an oil supply passage 17 communicating with a pressure chamber 16 defined in the cylinder chamber 12 behind the plunger 13. A check valve 18 is mounted at the oil outlet of the oil supply passage 17. When the pressure of the hydraulic oil in the pressure chamber 16 rises above the supply pressure of the hydraulic oil supplied through the oil supply passage 17, the check valve 18 closes the oil supply passage 17, preventing the flow of hydraulic oil in the pressure chamber 16 into the oil supply passage 17.

Between the housing 11 and the plunger 13, a retraction restrictor mechanism 20 for preventing the plunger 13 from retracting toward the closed end of the cylinder chamber 12 over a predetermined distance is provided.

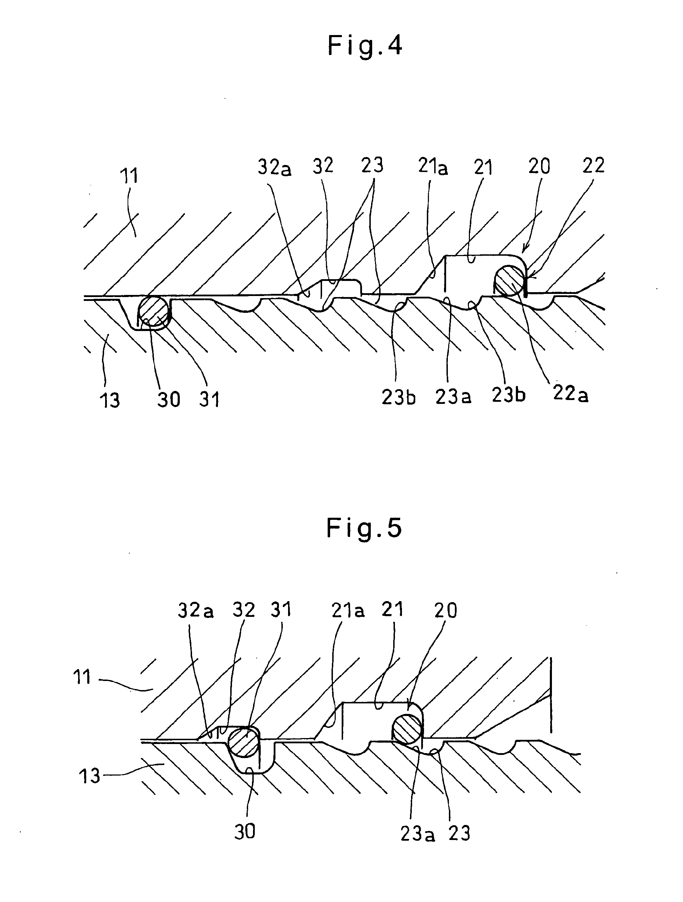

As shown in Figs. 2 and 4, the retraction restrictor mechanism 20 comprises a ring mounting groove 21 formed in the inner periphery of the housing 11 near the open end of the cylinder chamber 12, a register ring 22 having a radially elastically deformable ring portion 22a mounted in the ring mounting groove 21, and a plurality of circumferential grooves 23 formed in the outer periphery of the plunger 13 at axially equal intervals. The ring portion 22a of the register ring 22 is adapted to engage in one of the circumferential grooves 23. The circumferential grooves 23 each comprise a tapered surface 23a having its diameter decreasing toward the front end of the plunger 13 and an engaging surface 23b disposed at a small diameter end of the tapered surface 23a.

As shown in Fig. 1, the register ring 22 has a pair of control tabs 22b protruding from a window 19 formed in the housing 11 at its open end. By pinching the pair of control tabs 22b, the ring portion 22a can be expanded.

When the plunger 13 advances, the ring portion 22a of the register ring 22 slides rearwardly on the tapered surface 23a and engages into the next circumferential groove 23, thus allowing forward movement of the plunger 13. When the plunger 13 retracts, the ring portion 22a of the register ring 22 is trapped between the rear wall 21a of the ring mounting groove 21 and the engaging surface 23b of the circumferential groove 23, thus restricting the retraction of the plunger 13.

As shown in Fig. 2, a ring fitting groove 30 is formed in the outer periphery of the plunger 13 between the rearmost one of the axially arranged circumferential grooves 23 and the rear end of the plunger 13. A radially elastically deformable elastic ring 31 is fitted in the ring fitting groove 30.

As shown in Figs. 3 and 4, the elastic ring 31 is a C-shaped member having two separate ends and formed of a steel wire having a circular cross-section. The elastic ring 31 is fitted in the ring fitting groove 30 in a radially compressed state.

The elastic ring 31 of the invention is not limited to the one shown. For example, it may be made of a resin having excellent sliding properties.

As shown in Figs. 2 and 4, an engaging groove 32 is formed in the inner periphery of the housing 11 near the open end of the cylinder chamber 12, slightly displaced toward the closed end of the cylinder chamber 12 from the ring mounting groove 21.

When the elastic ring 31 is engaged in the engaging groove 32, the elastic ring 31 radially expands therein to such an extent that its inner diameter is smaller than the outer diameter of the plunger 13. The engaging groove 32 has a tapered side surface 32a near the closed end of the cylinder chamber.

The chain tensioner 10 of the first embodiment has its housing 11 mounted to an engine block such that the chain guide 6 shown in Fig. 1 is pressed by the plunger 13, which is biased outwardly of the cylinder chamber by the spring 15.

With the chain tensioner 10 mounted in such a manner, when the chain 5 vibrates and slackens due to changes in the angular velocity of the crankshaft 1 when the crankshaft 1 rotates once or due to changes in torque applied to the camshafts 3, the plunger 13 moves outwardly under the force of the spring 15, thus re-tensioning the chain 5.

When the plunger 13 advances, the ring portion 22a of the register ring 22 expands, pushed by the tapered surface 23a of the circumferential groove 23, thus allowing the plunger 13 to advance. When the amount of movement of the plunger 13 exceeds the pitch of the circumferential grooves 23, the ring portion 22a of the register ring 22 engages in the next rearward circumferential groove 23.

When the tension in the chain 5 increases, pushing force is applied from the chain to the plunger 13 through the chain guide 6. Hydraulic oil in the pressure chamber 16 dampens such pushing force.

If the engine is stopped with the slack side of the chain 5 tensioned according to the positions of the cams on the camshafts 3 when the engine is stopped, the plunger 13 is pushed by the chain 5. But in this state, because the ring portion 22a of the register ring 22 is trapped between the rear wall 21a of the ring mounting groove 21 and the engaging surface 23a of one of the circumferential grooves 23, the plunger 13 is prevented from retracting any further. This in turn prevents flapping of the chain 5 when the engine is restarted.

When the chain 5 and/or the chain tensioner 10 is dismounted for maintenance of the valve train of the engine, the plunger 13 is pushed out by the spring 15. When the plunger 13 is pushed out until the ring fitting groove 30 radially aligns with the engaging groove 32, the elastic ring 31 radially expands and engages in the engaging groove 32 as shown in Fig. 5.

In this state, the elastic ring 31 is held in a radially expanded state in the engaging groove 32 such that its inner diameter is smaller than the outer diameter of the plunger 13, so that the elastic ring 31 engages both the ring fitting groove 30 and the engaging groove 32. The elastic ring 31 thus prevents separation of the plunger 13 by preventing any further advancement of the plunger 13.

To re-set the chain tensioner after maintenance, with the ring portion 22a of the register ring 22 radially expanded by pinching its control tabs 22b, the plunger 13 is pushed into the cylinder chamber.

Since the register ring 22 serves only to restrict the retraction of the plunger 13 and is not used to prevent the plunger from being pushed out of the cylinder chamber, even when the ring portion 22a of the register ring 22 is radially expanded, the plunger is prevented from being pushed out of the cylinder chamber by the elastic ring 31.

When the plunger 13 is pushed into the cylinder chamber, the elastic ring 31 is pushed by the tapered surface 32a of the engaging groove 32 and radially compressed until completely received in the ring fitting groove 30. Thus, the plunger 13 can be retracted to its set position.

In the first embodiment, the elastic ring 31 is radially compressed by the tapered surface 32a of the engaging groove 32. But instead, the engaging groove 32 may have a polygonal cross-section and have a flat side wall perpendicular to the central axis of the cylinder chamber, near the closed end of the cylinder chamber. Such an engaging groove 32 has a depth less than half the diameter of the linear member forming the elastic ring 31. In this arrangement, when the plunger 13 is pushed into the cylinder chamber, the elastic ring 31 is radially compressed by the inner edge of the flat side wall of the engaging groove 32.

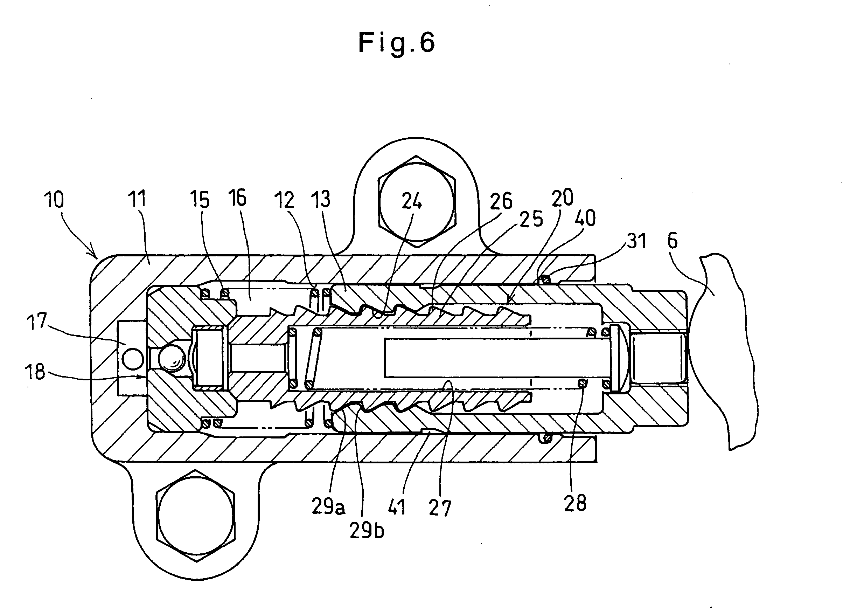

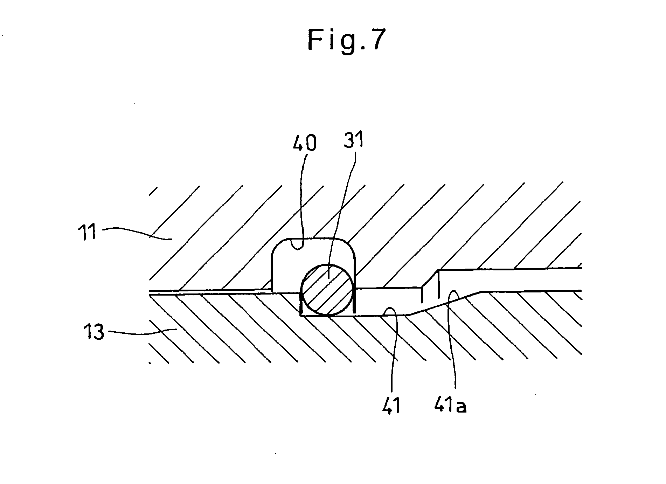

Figs. 6 and 7 show the chain tensioner according to the second embodiment of this invention. The chain tensioner of the second embodiment differs from the chain tensioner of the first embodiment in the retraction restrictor mechanism 20 for restricting the retraction of the plunger 13 and the separation preventive mechanism for preventing separation of the plunger from the housing.

The retraction restrictor mechanism 20 of the chain tensioner of the second embodiment includes an internal thread 24 formed on the inner periphery of the bore 14 of the plunger 13 near its open end, and a screw rod 25 having an external thread 26 formed on the outer periphery thereof and in engagement with the internal thread 24. The screw rod 25 defines a bore 27 having a front open end and a rear closed end. A spring 28 is mounted between the closed end of the bore 27 and the closed end of the bore 14 formed in the plunger 13 to bias the screw rod 25 and the plunger 13 away from each other.

Either of the internal thread 24 and the external thread 26 has a pressure flank 29a which bears pushing force when the plunger 13 is axially pushed into the cylinder chamber, and an opposite clearance flank 29b having a smaller flank angle than the pressure flank 29a. The threads 24 and 26 have therefore a serration-shaped longitudinal section. Also, the threads 24 and 26 have such a lead angle that the push rod 25 can move axially away from the plunger 13 while turning about its axis under the biasing force of the spring 28.

With this arrangement, if the engine stops with the chain 5 tensioned according to the positions of the cams when the engine stops, static pushing force is applied to the plunger 13 from the chain 5 through the chain guide 6. Such static pushing forced is borne by the pressure flanks 29a of the internal and external threads 24 and 26, which are in contact with each other. This prevents the plunger 13 from retracting while turning, thus keeping the chain 5 tensioned.

The clutch of the second embodiment further includes an anti-separation mechanism for preventing the plunger 13 from being pushed out of the cylinder chamber. The anti-separation mechanism comprises a ring fitting groove 40 formed in the inner periphery of the cylinder chamber 12 near its open end, a radially elastically deformable elastic ring 31 received in the ring fitting groove 40 in a radially expanded state, and an engaging groove 41 formed in the outer periphery of the plunger 13 near its rear end. The engaging groove 41 has a tapered surface 41a on its side near front end of the plunger 13.

When the elastic ring 31 is engaged in the engaging groove 41, the elastic ring 31 is radially compressed in the engaging groove 41 to such an extent that its outer diameter is larger than the inner diameter of the cylinder chamber 12.

With this arrangement, when the plunger 13 is pushed out by the spring 15 until the engaging groove 41 is radially aligned with the ring fitting groove 40, the elastic ring 31 is radially compressed and partially engaged in the engaging groove 41. In this state, the elastic ring 31 is trapped between the engaging groove 41 and the ring-fitting groove 40. The elastic ring 31 thus prevents separation of the plunger 13 by preventing any further advancement of the plunger 13.

In this state, when the plunger 13 is pushed into the cylinder chamber, the tapered surface 41a of the engaging groove 41 servers to contact and radially expand the elastic ring 31. Thus, the plunger 13 can be easily moved to a set position.

But instead of the tapered surface 41a, the engaging groove 41 may have a flat surface perpendicular to the central axis of the plunger 13 on its side near the front end of the plunger. Such an engaging groove 41 has a depth less than half the diameter of the linear member forming the elastic ring 31. In this arrangement, the elastic ring 31 is radially expanded by the outer edge of the flat surface of the engaging groove 41.

## Claims

1. A chain tensioner comprising a housing formed with a cylinder chamber, a plunger slidably mounted in said cylinder chamber, a spring mounted in said cylinder chamber and biasing said plunger outwardly of said cylinder chamber, and a retraction restrictor means provided between said housing and said plunger for preventing said plunger from retracting toward a closed end of said cylinder chamber over a predetermined distance, said housing being formed with an oil supply passage communicating with a pressure chamber defined in said cylinder chamber behind said plunger, whereby pushing force applied to said plunger is dampened by hydraulic oil supplied through said oil supply passage into said pressure chamber, **characterized in that** a ring fitting groove is formed in an outer periphery of said plunger at its portion near a rear end thereof which is located inside said cylinder chamber, that a radially elastically deformable elastic ring is received in said ring fitting groove in a radially compressed state, and that an engaging groove is formed in an inner periphery of said cylinder chamber near an open end thereof, said elastic ring being engageable in said engaging groove and being configured to radially expand in said engaging groove to such an extent that an inner diameter thereof is smaller than an outer diameter of said plunger.

2. The chain tensioner of claim 1 wherein said engaging groove has a tapered surface on its side near said closed end of said cylinder chamber.

3. A chain tensioner comprising a housing formed with a cylinder chamber, a plunger slidably mounted in said cylinder chamber, a spring mounted in said cylinder chamber and biasing said plunger outwardly of said cylinder chamber, and a retraction restrictor means provided between said housing and said plunger for preventing said plunger from retracting toward a closed end of said cylinder chamber over a predetermined distance, said housing being formed with an oil supply passage communicating with a pressure chamber defined in said cylinder chamber behind said plunger, whereby pushing force applied to said plunger is dampened by hydraulic oil supplied through said oil supply passage into said pressure chamber, **characterized in that** a ring fitting groove is formed in an inner periphery of said cylinder chamber near an open end thereof, that a radially elastically deformable elastic ring is received in said ring fitting groove in a radially expanded state, and that an engaging groove is formed in an outer periphery of said plunger near a rear end thereof, said elastic ring being engageable in said engaging groove and being configured to be radially compressed in said engaging groove to such an extent that an outer diameter thereof is larger than an inner diameter of said cylinder chamber.

4. The chain tensioner of claim 3 wherein said engaging groove has a tapered surface on its side near a front end of said plunger.

5. The chain tensioner of any of claims 1 to 4 wherein said elastic ring is a C-shaped member having two separate ends and formed of a steel wire having a circular cross-section.

6. The chain tensioner of any of claims 1 to 4 wherein said elastic ring is made of a resin having excellent sliding properties.
